Europäisches Patentamt

European Patent Office

Office européen des brevets

(19)

(11) Publication number: **0 390 409**
**A1**

(12) ## EUROPEAN PATENT APPLICATION

(21) Application number: **90303019.5**

(22) Date of filing: **21.03.90**

(51) Int. Cl.5: **B32B 29/00, B32B 27/10, D21H 27/36, D21H 27/40, //B44C7/00**

(30) Priority: **21.03.89 GB 8906526**

(43) Date of publication of application:
**03.10.90 Bulletin 90/40**

(84) Designated Contracting States:
**BE DE FR GB NL**

(71) Applicant: **ANSTEY WALLPAPER COMPANY LIMTED**
**Zoffany House, 74 Wood Lane End**
**Hemel Hempstead, Hertfordshire(GB)**

(72) Inventor: **Scott, Stephen Paul,**
**3 Field Avenue Shepshed**
**Leicestershire LE12 9SH(GB)**
Inventor: **Ferguson, Alexander, Frew Dair,**
**Springwood Davey Lane Alderley Edge**
**Cheshire SK9 7NZ(GB)**

(74) Representative: **Stebbing, Timothy Charles et al**
**Haseltine Lake & Co. Hazlitt House 28**
**Southampton Buildings Chancery Lane**
**London WC2A 1AT(GB)**

(54) **Wallpaper and method of manufacturing wallpaper.**

(57) The invention provides a deeply-embossed vinyl wallpaper made from a vinyl laminate face sheet and a backing sheet, with or without a printed design on the face sheet, and a method of manufacturing the same.

A vinyl laminate sheet (1) employed as the face sheet, and the backing sheet (2), are unwound continuously from respective drums and the adhesive is applied to the backing sheet (2) by an applicator (3). At a combining nip (4), the two sheets are joined together and bonded by the adhesive. The smooth laminate is fed through print stations (5) where any desired printed design can be added to the exposed surface of the vinyl coating. Then, in an embossing unit (6), the laminate is given a deep embossing by being forced through engraved rollers. The manufacture is completed by passing the embossed laminate through an oven (7), so as to dry out the laminate and to cure the adhesive thereby rendering it insensitive to moisture. The finished wallpaper is wound on a rewind drum (8).

## Wallpaper and Method of Manufacturing Wallpaper

The present invention relates to a wallpaper and to a method of manufacturing the same. More particularly, but not exclusively, the invention relates to embossed vinyl wallpapers and their manufacture.

One known method of producing wallpaper is by laminating together two sheets consisting of a face sheet, and a mechanical pulp base; while the laminate is still wet, embossing it with a deep embossing; and drying it out, so that the heavy emboss is retained in the wallpaper. This is known as 'Duplex' wallcovering, and a typical product consists of a 70g/m² face sheet, and a 90g/m² base.

With embossed laminated wallpapers of the Duplex type there can be a problem where the embossed design can lose its shape when the wallpaper is being hung. Wallpaper paste applied to the base soaks through and softens the adhesive used to join the two sheets so that when the wallpaper is hung, distortion of the embossed design results making it difficult to match the patterns of adjacent sheets.

Vinyl wallpaper is also produced, consisting of a polyvinyl chloride coating laminated onto a mechanical base paper, applied either by reverse roll coating calendering or other methods. After printing, this is embossed by heating the vinyl coating, and pressing it against a chilled roller, on which a design is engraved. The design is then reproduced on the vinyl. Since for commercial purposes, the solid vinyl component is light in weight (e.g about 100g/m²) there is a limit to the depth of embossing which can be achieved.

Lightweight vinyl has the additional drawback that the wallpaper may be somewhat translucent so that the previous colour or decoration on a wall, or imperfections thereon, may show through after the wallpaper is hung.

So far it has not proved possible to produce a deeply-embossed vinyl wallpaper at an economic cost. To produce a deep embossing in a conventional vinyl wallpaper would require a much thicker solid vinyl layer than has been used up to now, making the wallpaper heavy and expensive.

According to a first aspect of the present invention, there is provided wallpaper, comprising a face sheet having a layer made of plastics material, laminated with a base sheet by means of an adhesive incorporating a cross-linking agent, whereby the adhesive can be cured so as to render the adhesive insensitive to moisture.

In this way, it can be ensured that the adhesive is not affected by applying wallpaper paste prior to hanging the wallpaper. Deterioration of the laminated bond between the two sheets can therefore be avoided.

The wallpaper may have a relief pattern such as one produced by embossing. In this case, the problem with previous wallpapers of the relief pattern becoming deformed when applying wallpaper paste and hanging the wallpaper, is avoided.

As mentioned above, the face sheet includes a layer made of a plastics material such as polyvinyl chloride conveniently provided by a vinyl coating on a backing sheet. Alternatively, the face sheet could be a "solid" plastics (vinyl) sheet. A deeply-embossed vinyl wallpaper can therefore be produced which retains its shape on hanging.

Such a wallpaper can be described as a vinyl Duplex wallpaper, a type not previously available.

According to a second aspect of the invention, there is provided a method of manufacturing wallpaper, comprising steps of laminating together a face sheet having a layer made of a plastics material, and a base sheet, using an adhesive incorporating a cross-linking agent, and curing the adhesive so as to render the adhesive insensitive to moisture.

A wallpaper with a relief pattern may be produced by this method, in particular an embossed wallpaper. In the latter case, prior to the curing step there is performed a step of embossing the laminated sheets. This can be done by a known process such as pressing the sheets against an engraved roller.

The material and thickness of the plastics layer of the face sheet are selected so as to allow the plastics layer a degree of natural softness and stretch. This allows the face sheet to take up the embossing without any need for a pre-softening process such as the heating applied in the manufacture of conventional vinyl wallpaper.

The method of the invention is thus particularly suited to producing a deeply-embossed vinyl wallpaper, using a P.V.C. laminate sheet as the face sheet.

In the wallpaper or the wallpaper manufacturing method of the present invention, an example of a suitable adhesive is a polyvinyl acetate based adhesive with a melamine formaldehyde cross-linking agent. Other examples of suitable cross-linked adhesives include: polyvinyl acetate or polyvinyl alcohol, cross-linked with trivalent metal ions; and acrylic emulsions with acrylamide cross-linking. In general, the adhesive should have the property that it is moisture-sensitive prior to curing, for adequate bonding between the (normally paper) backing of the face sheet and the base sheet, but moisture-insensitive after curing.

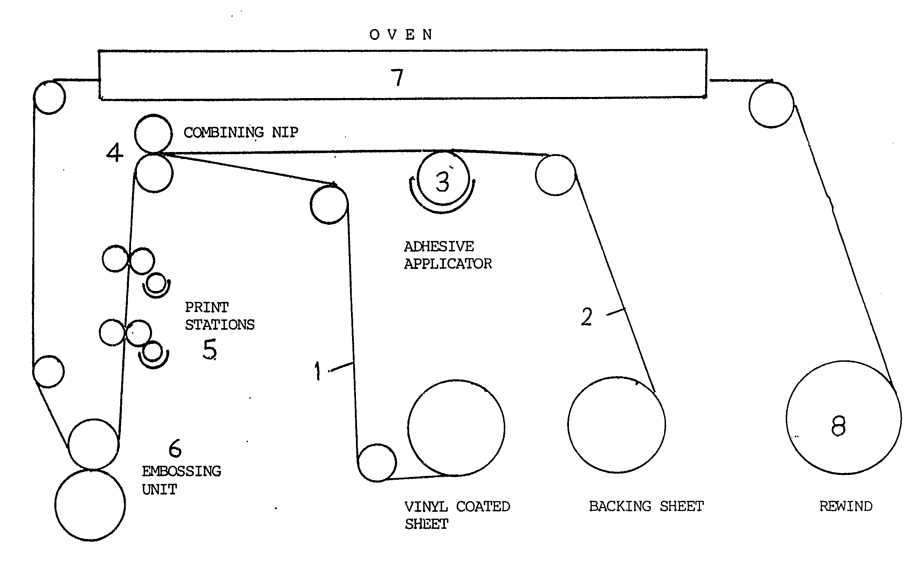

Reference is made, by way of example to the accompanying Figure illustrating apparatus for manufacturing wallpaper in accordance with the present invention.

This apparatus is capable of producing deeply-embossed vinyl wallpaper made from a vinyl laminate face sheet and a backing sheet, with or without a printed design on the face sheet.

As shown in the Figure, a vinyl laminate sheet 1, employed as the face sheet, and the backing sheet 2, are unwound continuously from respective drums and the adhesive is applied to the backing sheet 2 by an applicator 3. At a combining nip 4, the two sheets are joined together and bonded by the adhesive. The smooth laminate is fed through print stations 5 where any desired printed design can be added to the outer (display) surface of the vinyl coating. Then, in an embossing unit 6, the laminate is given a deep embossing by being forced through engraved rollers. The manufacture is completed by passing the embossed laminate through an oven 7, so as to dry out the laminate and to cure the adhesive thereby rendering it insensitive to moisture. The finished wallpaper is wound on a rewind drum 8.

The deeply-embossed vinyl wallpaper which can be obtained in this way is superior in many respects to conventional wallpapers.

When the wallpaper is applied to a wall, the water-based wallpaper paste does not affect the cured bond between the laminated sheets. Thus, the deep embossing is fully preserved during hanging and there is no slippage of the face sheet relative to the base sheet, making it easy to match the patterns on adjacent widths of wallpaper. This makes a vinyl Duplex wallpaper practical for the first time. Normally, the problem of softening and slippage during hanging would be aggravated if the face sheet of a Duplex type wallpaper were to include an outer plastics layer such as a vinyl coating, because the plastics layer would form an impenetrable barrier to the moisture from the wallpaper paste, trapping it underneath.

Compared with conventional vinyl wallpapers, the wallpaper of the present invention can be more deeply embossed, making it more attractive and more suitable for hanging on imperfect (non-smooth) walls, whilst requiring a thinner vinyl layer therefore enabling cheaper manufacture. Moreover, the Duplex construction eliminates the problem of translucency which is a drawback of traditional lightweight vinyl wallcoverings.

Compared with conventional Duplex wallpapers, it has the advantage of a vinyl outer surface which is much more wear-resistant than paper or the like, and yet does not have the problem of distortion and slippage on hanging.

Although the invention as described above is of particular application to embossed vinyl-coated wallpapers, it may also be advantageously applied to other sorts of wallpapers. For example, the face sheet need not be a vinyl coated sheet but could be a sheet coated with any other suitable plastics material, or a "solid" sheet of vinyl or other plastics material.

It is not essential that the wallpaper be embossed, and it could alternatively have a relief pattern formed in any other way. With other types of "relief" wallpaper, or even with a smooth laminated wallpaper, the invention could still be used to prevent mutual slippage between the face sheet and backing sheet when the wallpaper is hung.

## Claims

1. Wallpaper comprising a face sheet having a layer made of plastics material, laminated with a base sheet by means of an adhesive incorporating a cross-linking agent, whereby the adhesive can be cured so as to render the adhesive insensitive to moisture.

2. Wallpaper as claimed in claim 1, wherein the face sheet comprises a backing sheet having a vinyl coating on its exposed face.

3. Wallpaper as claimed in claim 1, wherein the face sheet is a solid vinyl sheet.

4. Wallpaper as claimed in claim 1, 2 or 3, wherein at least the face sheet has a relief pattern.

5. Wallpaper as claimed in claim 4, wherein the relief pattern is formed by embossing.

6. Wallpaper as claimed in any preceding claim, wherein the face sheet has a printed pattern on its exposed face.

7. Wallpaper as claimed in any preceding claim, wherein the adhesive is of a type which is moisture-sensitive prior to curing and moisture-insensitive thereafter.

8. A method of manufacturing wallpaper, comprising steps of laminating together a face sheet having a layer made of a plastics material, and a base sheet, using an adhesive incorporating a cross-linking agent, and curing the adhesive so as to render the adhesive insensitive to moisture.

9. A method as claimed in claim 8, further comprising a step, prior to the curing step, of embossing the laminated sheets.

10. A method as claimed in claim 9, wherein the embossing step is performed prior to the laminating step.

11. A method as claimed in claim 8, 9 or 10, further comprising a step, prior to or following the laminating step, of printing a pattern on the face sheet.

12. A method as claimed in claim 8, 9, 10 or 11, wherein the adhesive used is of a type which is moisture-sensitive prior to the curing step and moisture-insensitive thereafter.

## DOCUMENTS CONSIDERED TO BE RELEVANT

EP 90303019.5

| Category | Citation of document with indication where appropriate, of relevant passages | Relevant to claim | CLASSIFICATION OF THE APPLICATION (Int. Cl⁵) |
|---|---|---|---|
| Y | EP - A1 - 0 297 875 (CROWN) <br> * Claims 1,10 * <br> -- | 1,5,7, 8,10, 12 | B 32 B 29/00 <br> B 32 B 27/10 <br> D 21 H 27/36 <br> D 21 H 27/40 <br> //B 44 C 7/00 |
| Y | EP - A1 - 0 103 458 (REED INT.) <br> * Claim 1; fig. 1; page 3, line 22 - page 4, line 11 * <br> -- | 1,5, 7-9,12 | |
| Y | EP - A2 - 0 098 608 (STRAUVEN) <br> * Abstract; claims 1,10,11 * <br> -- | 1,7-9 | |
| Y | GB - A - 1 209 885 (BROCKHAUS) <br> * Claims 1,5 * <br> ---- | 1,8,12 | |

| TECHNICAL FIELDS SEARCHED (Int. Cl⁵) |
|---|
| B 32 B 29/00 <br> B 32 B 27/00 <br> D 21 H 27/00 |

The present search report has been drawn up for all claims

| Place of search | Date of completion of the search | Examiner |
|---|---|---|
| VIENNA | 31-05-1990 | HOCHHAUSER |